# EUROPÄISCHE PATENTANMELDUNG

(11) **EP 4 604 342 A1**
(43) Veröffentlichungstag der Anmeldung: **20.08.2025**
(21) Anmeldenummer: 25155686.6
(22) Anmeldetag: 04.02.2025
(51) Int. Cl.: H02J 1/08, B60R 16/033

(54) **REDUNDANTE ENERGIEVERSORGUNG FÜR ELEKTRISCHE VERBRAUCHER**

(30) Priorität: 13.02.2024 DE 102024103921
(71) Anmelder: LEONI Bordnetz-Systeme GmbH, 97318 Kitzingen (DE)
(72) Erfinder: EBELING, Sandra, 91483 Oberscheinfeld (DE); KIRCHGEßNER, Daniel, 97222 Rimpar (DE); Ebert, Matthias, 97337 Dettelbach (DE); Rösler, Martin, 91126 Schwabach (DE); Koch, Wolfgang, 97320 Buchbrunn (DE)
(74) Vertreter: Frenkel, Matthias Alexander

(57) **Zusammenfassung**

Die vorliegende Erfindung betrifft eine Vorrichtung zur redundanten Versorgung eines elektrischen Verbrauchers sowie ein Steuergerät und ein Fahrzeug mit einer solchen Vorrichtung. Ein Ausführungsbeispiel der Vorrichtung (1) weist auf: einen ersten Schalter (10), der mit mindestens einem Verbraucheranschluss mindestens eines elektrischen Verbrauchers (300; 300_1, 300_2, 300_3) verbindbar oder verbunden und ausgebildet ist, einen ersten Schaltzustand und einen zweiten Schaltzustand anzunehmen; und eine Steuerung (2), die ausgebildet ist, den ersten Schalter (10) anzuweisen, den ersten Schaltzustand oder den zweiten Schaltzustand anzunehmen. Der erste Schalter (10) ist angeordnet und ausgebildet, in dem ersten Schaltzustand eine leitende Verbindung zwischen einem Bordnetzanschluss (120) eines ersten Bordnetzes (100) eines Fahrzeugs und dem mindestens einen Verbraucheranschluss des mindestens einen elektrischen Verbrauchers (300; 300_1, 300_2, 300_3) herzustellen und in dem zweiten Schaltzustand eine leitende Verbindung zwischen einem Bordnetzanschluss (220) eines zweiten Bordnetzes (200) des Fahrzeugs und dem mindestens einen Verbraucheranschluss des mindestens einen elektrischen Verbrauchers (300; 300_1, 300_2, 300_3) herzustellen.

## Beschreibung

Die vorliegende Erfindung betrifft eine Vorrichtung zur redundanten Versorgung eines elektrischen Verbrauchers sowie ein Steuergerät und ein Fahrzeug mit einer solchen Vorrichtung.

Energieverbraucher werden in Fahrzeugen normalerweise einzeln in mechanischen Verteilerboxen abgesichert. Die zugehörigen Verbindungen erfolgen über passive Elemente, z. B. über Sammelschienen (busbars), Leitungen usw.

Mit Zunahme technischer Möglichkeiten schreitet der Automatisierungsgrad von Fahrzeugfunktionen stetig voran. Ein Energiebordnetz eines zumindest möglichst automatisiert fahrenden Fahrzeugs ist ein Bestandteil eines Fahrzeugs, der eine zuverlässige Stromversorgung und/oder Datenübertragung für verschiedene elektrische Verbraucher, wie beispielsweise Sensoren, Aktoren und/oder Steuergeräte in dem Fahrzeug gewährleisten muss. Ab dem sogenannten Automatisierungslevel SAE Level 3 kann ein Fahrer nicht mehr als Rückfall ("hot backup") für das Automatisierungssystem angesehen werden und das Fahrzeug muss nach Auftreten eines Erstfehlers weiterhin die Fahrzeugfunktion, zumindest für eine gewisse Zeit, aufrechterhalten (können). Dies ist mit Schmelzsicherungen auf technischer Ebene nicht möglich. Nicht jeder Einzelfehler, z. B. an einer Sammelschiene (busbar) oder Leitung, erfüllt diese Anforderung.

Generell können sich Probleme bei der Verwendung von Schmelzsicherungen ergeben, da diese allgemein träger auf einen Überstrom reagieren als elektronische Sicherungen. Ferner können, im Gegensatz zu elektronischen Sicherungen, einmal ausgelöste Schmelzsicherungen nicht mehr verwendet werden und müssen ausgetauscht werden.

Es besteht daher ein Bedarf nach einer verbesserten, insbesondere zuverlässigen, Energieversorgung von elektrischen Verbrauchern in einem Fahrzeug.

Gemäß einem ersten Aspekt wird eine Vorrichtung zur redundanten Versorgung mindestens eines elektrischen Verbrauchers vorgeschlagen. Die Vorrichtung weist einen ersten Schalter und eine Steuerung auf. Der erste Schalter ist mit mindestens einem Verbraucheranschluss mindestens eines elektrischen Verbrauchers verbindbar oder verbunden. Der erste Schalter ist ausgebildet, einen ersten Schaltzustand und einen zweiten Schaltzustand anzunehmen. Die Steuerung ist ausgebildet, den ersten Schalter anzuweisen, den ersten Schaltzustand oder den zweiten Schaltzustand anzunehmen. Der erste Schalter ist angeordnet und ausgebildet, in dem ersten Schaltzustand eine leitende Verbindung zwischen einem Bordnetzanschluss eines ersten Bordnetzes eines Fahrzeugs und dem mindestens einen Verbraucheranschluss des mindestens einen elektrischen Verbrauchers herzustellen. Der erste Schalter ist angeordnet und ausgebildet, in dem zweiten Schaltzustand eine leitende Verbindung zwischen einem Bordnetzanschluss eines zweiten Bordnetzes des Fahrzeugs und dem mindestens einen Verbraucheranschluss des mindestens einen elektrischen Verbrauchers herzustellen.

Der erste Schalter kann insbesondere als genau ein einziger erster Schalter ausgebildet sein. Eine erste Seite des ersten Schalters kann mit mindestens einem Verbraucheranschluss mindestens eines elektrischen Verbrauchers verbindbar oder verbunden sein. Bei der ersten Seite kann es sich um eine nicht schaltbare oder nicht veränderliche Seite des ersten Schalters handeln. Eine zweite Seite des ersten Schalters kann den ersten Schaltzustand annehmen. Die zweite Seite des ersten Schalters kann den zweiten Schaltzustand annehmen.

Der Bordnetzanschluss des ersten Bordnetzes kann ein Dauerplus (Klemme30) des ersten Bordnetzes aufweisen, beispielsweise mit diesem verbunden sein, oder als ein Dauerplus (Klemme30) des ersten Bordnetzes ausgebildet sein. Der erste Schalter kann als ein Relaisschalter oder als ein Halbleiterschalter, z. B. als ein MOSFET (MOSFET: Metall-Oxid-Halbleiter-Feldeffekttransistor) oder als ein Bipolartransistor, ausgebildet sein.

Der erste Schalter kann nicht gleichzeitig den ersten Schaltzustand und den zweiten Schaltzustand annehmen. Zu einem bestimmten Zeitpunkt kann der erste Schalter nur den ersten Schaltzustand oder den zweiten Schaltzustand annehmen. Auf diese Weise kann durch den ersten Schalter eine XOR-Logik (Exklusiv Oder: XOR) oder XOR-Schaltung implementiert werden. Nimmt der erste Schalter den ersten Schaltzustand an, ist eine Verbindung zwischen dem Bordnetzanschluss des ersten Bordnetzes und dem Verbindungsanschluss des mindestens einen elektrischen Verbrauchers herstellbar oder hergestellt. In diesem Fall kann der mindestens eine elektrische Verbraucher aus dem ersten Bordnetz mit Strom / Spannung / Energie versorgt werden. Nimmt der erste Schalter den zweiten Schaltzustand an, ist eine Verbindung zwischen dem Bordnetzanschluss des zweiten Bordnetzes und dem Verbindungsanschluss des mindestens einen elektrischen Verbrauchers herstellbar oder hergestellt. In diesem Fall kann der mindestens eine elektrische Verbraucher aus dem zweiten Bordnetz mit Strom / Spannung / Energie versorgt werden.

Unter Energie kann hierbei jede Form elektrischer Energie verstanden werden, mit der elektrische Verbraucher oder elektrische Komponenten eines Bordnetzes betrieben werden können. Als Beispiel seien hier ein elektrischer Strom, eine elektrische Spannung oder Kombinationen daraus, wie elektrische Leistung oder elektrische Arbeit oder elektrische Energie zu verstehen.

Die Steuerung kann ausgebildet sein, den ersten Schalter in Abhängigkeit von Informationen über das erste Bordnetz anzuweisen, den ersten Schaltzustand oder den zweiten Schaltzustand anzunehmen. Zusätzlich oder alternativ kann die Steuerung ausgebildet sein, den ersten Schalter in Abhängigkeit von Informationen über das zweite Bordnetz anzuweisen, den ersten Schaltzustand oder den zweiten Schaltzustand anzunehmen. Zusätzlich oder alternativ kann die Steuerung ausgebildet sein, den ersten Schalter in Abhängigkeit von Informationen über den mindestens einen elektrischen Verbraucher anzuweisen, den ersten Schaltzustand oder den zweiten Schaltzustand anzunehmen. Durch Berücksichtigung der genannten Informationen kann sichergestellt werden, dass ein elektrischer Verbraucher zuverlässig von dem ersten oder dem zweiten Bordnetz mit Strom / Spannung / Energie versorgt wird.

Die Informationen über das erste Bordnetz können Informationen über eine Verfügbarkeit und/oder einen Zustand von mindestens einer Energiequelle / Spannungsversorgung des ersten Bordnetzes aufweisen. Die Informationen über das zweite Bordnetz können Informationen über eine Verfügbarkeit und/oder einen Zustand von mindestens einer Energiequelle / Spannungsversorgung des zweiten Bordnetzes aufweisen. Die Informationen über den mindestens einen elektrischen Verbraucher können Informationen über einen Zustand des mindestens einen elektrischen Verbrauchers aufweisen. Beispielsweise können die Informationen über den mindestens einen elektrischen Verbraucher darauf hinweisen, welche(r) elektrische Verbraucher (priorisiert) mit Energie zu versorgen ist/sind und welche(r) nicht.

Der erste Schalter kann als ein normalerweise geschlossener (normally closed (NC)) Schalter ausgebildet sein. Anders ausgedrückt kann der erste Schalter in einem Ausgangszustand einen geschlossenen Schaltzustand annehmen. Der Ausgangszustand kann dem ersten Schaltzustand entsprechen. In diesem Fall kann der mindestens eine elektrische Verbraucher in dem Ausgangszustand des ersten Schalters von dem ersten Bordnetz mit Strom / Spannung / Energie versorgt werden. Wird beispielsweise eine Spannung an den ersten Schalter oder an einer den ersten Schalter schaltenden Anordnung angelegt, kann der erste Schalter aus dem ersten Schaltzustand in den zweiten Schaltzustand übergehen. Beispielsweise kann die Steuerung die Spannung an den ersten Schalter oder an einer den ersten Schalter schaltenden Anordnung anlegen oder eine Entität instruieren/anweisen, die Spannung an dem ersten Schalter oder an einer den ersten Schalter schaltenden Anordnung anzulegen. Es ist denkbar, dass der erste Schalter von dem ersten Schaltzustand in den zweiten Schaltzustand übergeht, wenn die angelegte Spannung einen Spannungsschwellenwert überschreitet. Liegt keine Spannung oder eine Spannung unter oder bis zu dem Spannungsschwellenwert an dem ersten Schalter oder an einer den ersten Schalter schaltenden Anordnung an, kann wiederum der erste Schalter den ersten Schaltzustand annehmen, beispielsweise von dem zweiten Schaltzustand in den ersten Schaltzustand übergehen oder in dem ersten Schaltzustand bleiben.

Die Vorrichtung kann ferner einen zweiten Schalter aufweisen. Der zweite Schalter kann mit einem Bordnetzanschluss des zweiten Bordnetzes verbindbar oder verbunden sein. Der zweite Schalter kann ausgebildet sein, einen ersten Schaltzustand und einen zweiten Schaltzustand anzunehmen. Die Steuerung kann ausgebildet sein, den zweiten Schalter anzuweisen, den ersten Schaltzustand oder den zweiten Schaltzustand anzunehmen. Der zweite Schalter kann angeordnet und ausgebildet sein, in dem ersten Schaltzustand eine leitende Verbindung zwischen dem Bordnetzanschluss des zweiten Bordnetzes des Fahrzeugs und dem ersten Schalter zu trennen oder zu verhindern. Der zweite Schalter kann angeordnet und ausgebildet sein, in dem zweiten Schaltzustand eine leitende Verbindung zwischen dem Bordnetzanschluss des zweiten Bordnetzes des Fahrzeugs und dem ersten Schalter herzustellen oder zu ermöglichen.

Der zweite Schalter kann insbesondere als genau ein einziger zweiter Schalter ausgebildet sein. Eine erste Seite des zweiten Schalters kann mit einem Bordnetzanschluss des zweiten Bordnetzes verbindbar oder verbunden sein. Bei der ersten Seite kann es sich um eine nicht schaltbare oder nicht veränderliche Seite des zweiten Schalters handeln. Eine zweite Seite des zweiten Schalters kann den ersten Schaltzustand annehmen. Die zweite Seite des zweiten Schalters kann den zweiten Schaltzustand annehmen.

Der zweite Schalter kann als ein Relaisschalter oder als ein Halbleiterschalter, z. B. als ein MOSFET oder als ein Bipolartransistor, ausgebildet sein. Der zweite Schalter kann von dem ersten Schalter galvanisch getrennt sein. Anders ausgedrückt, der erste Schalter und der zweite Schalter können als voneinander galvanisch getrennte Schalter ausgebildet sein, oder, kurz gesagt, der erste Schalter und der zweite Schalter können als galvanisch getrennte Schalter ausgebildet sein.

Der zweite Schalter kann nicht gleichzeitig den ersten Schaltzustand und den zweiten Schaltzustand annehmen. Zu einem bestimmten Zeitpunkt kann der zweite Schalter nur den ersten Schaltzustand oder den zweiten Schaltzustand annehmen. Auf diese Weise kann durch den zweiten Schalter eine XOR-Logik oder XOR-Schaltung des ersten Schalters unterstützt werden. Nimmt der zweite Schalter den ersten Schaltzustand an, ist eine Verbindung zwischen dem Bordnetzanschluss des zweiten Bordnetzes und dem ersten Schalter getrennt oder nicht herstellbar. In diesem Fall wird sichergestellt, dass keine Verbindung zwischen dem Bordnetzanschluss des zweiten Bordnetzes und dem mindestens einen elektrischen Verbraucher herstellbar ist und der mindestens eine elektrische Verbraucher nicht von dem zweiten Bordnetz mit Strom / Spannung / Energie versorgt werden kann. Nimmt der zweite Schalter den zweiten Schaltzustand an, ist eine Verbindung zwischen dem Bordnetzanschluss des zweiten Bordnetzes und dem mindestens einen elektrischen Verbraucher grundsätzlich herstellbar. In diesem Fall kann der mindestens eine elektrische Verbraucher aus dem zweiten Bordnetz mit Strom / Spannung / Energie versorgt werden, wenn zudem der erste Schalter den zweiten Schaltzustand annimmt. Anders ausgedrückt, wenn der erste Schalter den zweiten Schaltzustand annimmt und der zweite Schalter den zweiten Schaltzustand annimmt, kann der mindestens eine elektrische Verbraucher mit Strom / Spannung / Energie aus dem zweiten Bordnetz versorgt werden. Wenn hingegen der zweite Schalter den ersten Schaltzustand annimmt, kann der mindestens eine elektrische Verbraucher selbst dann nicht mit Strom / Spannung / Energie aus dem zweiten Bordnetz versorgt werden, wenn der zweite Schalter den zweiten Schaltzustand annimmt.

Die Steuerung kann ausgebildet sein, den zweiten Schalter in Abhängigkeit von Informationen über das erste Bordnetz anzuweisen, den ersten Schaltzustand oder den zweiten Schaltzustand anzunehmen. Zusätzlich oder alternativ kann die Steuerung ausgebildet sein, den zweiten Schalter in Abhängigkeit von Informationen über das zweite Bordnetz anzuweisen, den ersten Schaltzustand oder den zweiten Schaltzustand anzunehmen. Zusätzlich oder alternativ kann die Steuerung ausgebildet sein, den zweiten Schalter in Abhängigkeit von Informationen über den mindestens einen elektrischen Verbraucher anzuweisen, den ersten Schaltzustand oder den zweiten Schaltzustand anzunehmen. Durch Berücksichtigung der genannten Informationen kann sichergestellt werden, dass ein elektrischer Verbraucher zuverlässig ausschließlich von dem ersten oder dem zweiten Bordnetz mit Strom / Spannung / Energie versorgt wird.

Die Informationen über das erste Bordnetz können Informationen über eine Verfügbarkeit und/oder einen Zustand von mindestens einer Energiequelle / Spannungsversorgung des ersten Bordnetzes aufweisen. Die Informationen über das zweite Bordnetz können Informationen über eine Verfügbarkeit und/oder einen Zustand von mindestens einer Energiequelle / Spannungsversorgung des zweiten Bordnetzes aufweisen. Die Informationen über den mindestens einen elektrischen Verbraucher können Informationen über einen Zustand des mindestens einen elektrischen Verbrauchers aufweisen. Beispielsweise können die Informationen über den mindestens einen elektrischen Verbraucher darauf hinweisen, welche(r) elektrische Verbraucher (priorisiert) mit Energie zu versorgen ist/sind und welche(r) nicht.

Der zweite Schalter kann als ein normalerweise geöffneter (normally open (NO)) Schalter ausgebildet sein. Ein solcher normalerweise geöffneter Schalter kann auch als ein Einschalter oder Schließer bezeichnet werden. Anders ausgedrückt kann der zweite Schalter in einem Ausgangszustand einen offenen/geöffneten Schaltzustand annehmen. Der Ausgangszustand kann dem ersten Schaltzustand entsprechen. In diesem Fall kann der zweite Schalter eine Verbindung zu dem zweiten Bordnetz trennen. Eine Versorgung des mindestens einen elektrischen Verbrauchers mit Strom / Spannung / Energie aus dem zweiten Bordnetz ist selbst dann nicht möglich, wenn der erste Schalter den zweiten Schaltzustand annimmt. Wird beispielsweise eine Spannung an den zweiten Schalter oder an einer den zweiten Schalter schaltenden Anordnung angelegt, kann der zweite Schalter aus dem ersten Schaltzustand in den zweiten Schaltzustand übergehen. Beispielsweise kann die Steuerung die Spannung an den zweiten Schalter oder an einer den zweiten Schalter schaltenden Anordnung anlegen oder eine Entität instruieren/anweisen, die Spannung an dem zweiten Schalter oder an einer den zweiten Schalter schaltenden Anordnung anzulegen. Es ist denkbar, dass der zweite Schalter von dem ersten Schaltzustand in den zweiten Schaltzustand übergeht, wenn die angelegte Spannung einen Spannungsschwellenwert überschreitet. Falls die angelegte Spannung den Spannungsschwellenwert unterschreitet oder diesem entspricht oder falls keine Spannung angelegt ist, kann der zweite Schalter den ersten Schaltzustand annehmen, beispielsweise von dem zweiten Schaltzustand in den ersten Schaltzustand übergehen oder in dem zweiten Schaltzustand verbleiben.

Die Vorrichtung kann mindestens einen dritten Schalter aufweisen. Der mindestens eine dritte Schalter kann mit einem Bordnetzanschluss des zweiten Bordnetzes verbindbar oder verbunden sein. Der mindestens eine dritte Schalter kann ausgebildet sein, einen ersten Schaltzustand und einen zweiten Schaltzustand anzunehmen. Die Steuerung kann ausgebildet sein, den mindestens einen dritten Schalter anzuweisen, den ersten Schaltzustand oder den zweiten Schaltzustand anzunehmen. Der mindestens eine dritte Schalter kann angeordnet und ausgebildet sein, in dem ersten Schaltzustand eine leitende Verbindung zwischen dem Bordnetzanschluss des zweiten Bordnetzes des Fahrzeugs und mindestens einer Induktivität, insbesondere mindestens einer Spule, zu trennen oder zu verhindern. Der mindestens eine dritte Schalter kann angeordnet und ausgebildet sein, in dem zweiten Schaltzustand eine leitende Verbindung zwischen einem Bordnetzanschluss des zweiten Bordnetzes des Fahrzeugs und mindestens einer Induktivität, insbesondere mindestens einer Spule, herzustellen oder zu ermöglichen.

Der mindestens eine dritte Schalter kann als ein Relaisschalter oder als ein Halbleiterschalter, z. B. als ein MOSFET oder als ein Bipolartransistor, ausgebildet sein. Rein beispielhaft sei als ein konkretes Ausführungsbeispiel hier genannt, dass der erste Schalter als ein Relaisschalter ausgebildet sein kann, der zweite Schalter als ein Relaisschalter ausgebildet sein kann und der mindestens eine dritte Schalter als mindestens ein Halbleiterschalter ausgebildet sein kann. Auf diese Weise können die Vorteile von Relaisschaltern mit den Vorteilen von Halbleiterschaltern kombiniert werden. Gemäß diesem Ausführungsbeispiel kann die mindestens eine Induktivität, insbesondere die mindestens eine Spule, zum Schalten des ersten Schalters und/oder des zweiten Schalters dienen.

Beispielsweise kann für den ersten Schalter eine Induktivität vorgesehen sein, deren Verbindung zu dem zweiten Bordnetz über einen, insbesondere einen einzigen, dritten Schalter getrennt oder hergestellt werden kann. Ferner kann für den zweiten Schalter eine Induktivität vorgesehen sein, deren Verbindung zu dem zweiten Bordnetz über einen, insbesondere einen einzigen, dritten Schalter getrennt oder hergestellt werden kann.

Der mindestens eine dritte Schalter kann als ein normalerweise geöffneter (normally open (NO)) Schalter ausgebildet sein. Anders ausgedrückt kann der mindestens eine dritte Schalter in einem Ausgangszustand einen offenen/geöffneten Schaltzustand annehmen. Der Ausgangszustand kann dem ersten Schaltzustand entsprechen. In diesem Fall kann der mindestens eine dritte Schalter von dem Bordnetzanschluss des zweiten Bordnetzes getrennt sein. Ein Schalten des ersten und/oder zweiten Schalters ist in diesem Fall nicht möglich. Wird beispielsweise eine Spannung an den mindestens einen dritten Schalter angelegt, kann der mindestens eine dritte Schalter aus dem ersten Schaltzustand in den zweiten Schaltzustand übergehen. Beispielsweise kann die Steuerung die Spannung an den mindestens einen dritten Schalter anlegen oder eine Entität instruieren/anweisen, die Spannung an dem mindestens einen dritten Schalter anzulegen. Es ist denkbar, dass der mindestens eine dritte Schalter von dem ersten Schaltzustand in den zweiten Schaltzustand übergeht, wenn die angelegte Spannung einen Spannungsschwellenwert überschreitet. In dem zweiten Schaltzustand kann eine Verbindung zwischen dem mindestens einen dritte Schalter und dem Bordnetzanschluss des zweiten Bordnetzes herstellbar oder hergestellt sein. Ein Schalten des ersten und/oder zweiten Schalters über die jeweils zugehörige Induktivität ist in diesem Fall möglich.

Das erste Bordnetz und das zweite Bordnetz können galvanisch voneinander getrennt sein. Dementsprechend können der erste Schalter und der zweite Schalter galvanisch voneinander getrennt sein. In dem ersten Bordnetz kann ein elektrische Spannungsquelle vorgesehen sein. In dem zweiten Bordnetz kann eine elektrische Spannungsquelle vorgesehen sein.

Der mindestens eine elektrische Verbraucher kann mindestens einen sicherheitsrelevanten elektrischen Verbraucher aufweisen, beispielsweise eine Rückleuchte eines Fahrzeugs. Der mindestens eine elektrische Verbraucher kann als ein sicherheitsrelevanter elektrischer Verbraucher, beispielsweise als eine Rückleuchte eines Fahrzeugs, ausgebildet sein.

Gemäß einem zweiten Aspekt wird ein Steuergerät zur redundanten Versorgung mindestens eines elektrischen Verbrauchers vorgeschlagen. Das Steuergerät weist eine Vorrichtung gemäß dem ersten Aspekt auf. Das Steuergerät kann in Langform auch als elektronisches Steuergerät (ECU) bezeichnet werden. Das Steuergerät kann ein Zonensteuergerät aufweisen oder als ein Zonensteuergerät ausgebildet sein.

Gemäß einem dritten Aspekt wird ein Fahrzeug zur redundanten Versorgung mindestens eines elektrischen Verbrauchers vorgeschlagen. Das Fahrzeug weist die Vorrichtung gemäß dem ersten Aspekt auf. Zusätzlich oder alternativ weist das Fahrzeug das Steuergerät gemäß dem zweiten Aspekt auf. Das Fahrzeug weist mindestens einen elektrischen Verbraucher auf.

Auch wenn einige der voranstehend beschriebenen Details in Bezug auf die Vorrichtung gemäß dem ersten Aspekt beschrieben wurden, so können diese Details auch in entsprechender Weise in dem Steuergerät gemäß dem zweiten Aspekt realisiert sein/werden oder in dem Fahrzeug gemäß dem dritten Aspekt realisiert sein/werden und umgekehrt.

Die vorliegende Offenbarung soll weiter anhand von Figuren erläutert werden. Diese Figuren zeigen schematisch:
Figur 1 ein Beispiel für eine Vorrichtung zu redundanten Versorgung eines elektrischen Verbrauchers;
Figur 2 eine Variante des Beispiels aus Figur 1.

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können. Beispielsweise werden im Folgenden spezifische Konfigurationen und Ausgestaltungen eines Systems beschrieben, die nicht als einschränkend anzusehen sind. Auch wenn die nachstehend beschriebenen Aspekte in Bezug auf eine Vorrichtung beschrieben wurden, so können diese Aspekte auch in entsprechender Weise in einem übergeordneten System oder einem Verfahren realisiert sein/werden und umgekehrt.

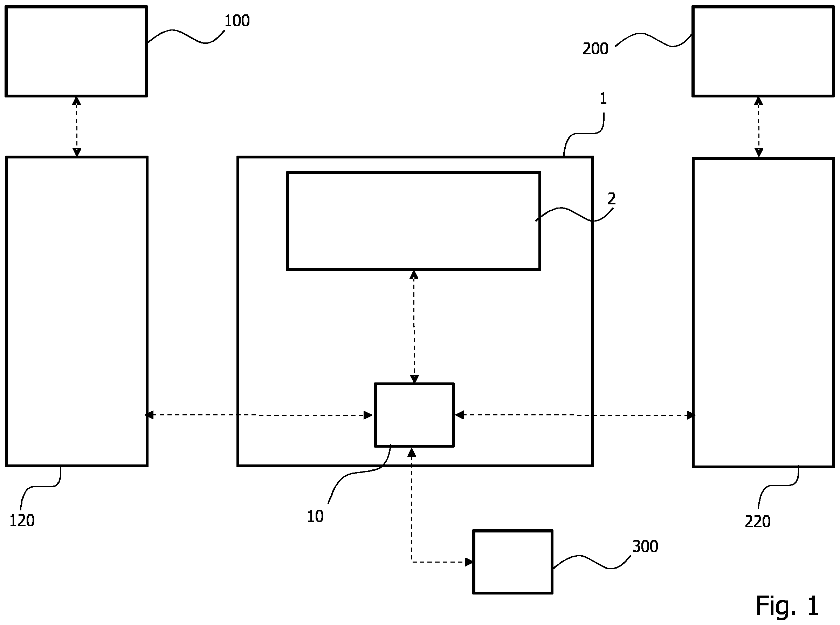

Figur 1 zeigt ein Beispiel für eine Vorrichtung 1 zur redundanten Versorgung mindestens eines elektrischen Verbrauchers 300. In dem Beispiel aus Figur 1 ist beispielhaft genau ein einziger elektrischer Verbraucher 300 gezeigt. Die Vorrichtung 1 weist einen, in Figur 1 vereinfach dargestellten, ersten Schalter 10 auf. Die Vorrichtung weist eine Steuerung 2 auf. Die Steuerung 2 ist mit dem ersten Schalter 10 auf geeignete Weise verbunden, beispielsweise drahtlos und/oder drahtgebunden. Die Steuerung 2 kann beispielsweise als ein Mikrocontroller ausgebildet sein.

Der erste Schalter 10 ist mit einem Verbraucheranschluss des elektrischen Verbrauchers 300 verbindbar oder in dem Beispiel aus Figur 1 verbunden. Der erste Schalter 10 ist ausgebildet, einen ersten Schaltzustand und einen zweiten Schaltzustand anzunehmen. In der in Figur 1 gezeigten Darstellung befindet sich der erste Schalter in seinem Ausgangszustand (=dem ersten Schaltzustand). In dem ersten Schaltzustand stellt der erste Schalter eine leitende Verbindung zwischen einem Bordnetzanschluss 120 eines ersten Bordnetzes 100 eines Fahrzeugs und dem Verbraucheranschluss des elektrischen Verbrauchers 300 her. Die Steuerung 2 ist ausgebildet, den ersten Schalter 10 anzuweisen, den ersten Schaltzustand oder den zweiten Schaltzustand anzunehmen. Beispielsweise weist die Steuerung 2 den ersten Schalter 10 an, den zweiten Schaltzustand anzunehmen. In dem zweiten Schaltzustand stellt der erste Schalter 10 eine leitende Verbindung zwischen einem Bordnetzanschluss 220 eines zweiten Bordnetzes 200 des Fahrzeugs und dem Verbraucheranschluss des elektrischen Verbrauchers 300 her.

Die Steuerung 2 kann zur Anweisung des ersten Schalters 10 verschiedene Informationen berücksichtigen. Zum Beispiel kann die Steuerung 2 Informationen über das erste Bordnetz 100 und/oder das zweite Bordnetz 200 und/oder den elektrischen Verbraucher 300 berücksichtigen. Die Steuerung 2 kann den ersten Schalter 10 oder eine den ersten Schalter schaltende Anordnung in Abhängigkeit von den entsprechenden Informationen anweisen, den ersten Schaltzustand oder den zweiten Schaltzustand anzunehmen, beispielsweise in dem ersten Schaltzustand zu verbleiben oder von dem ersten in den zweiten Schaltzustand überzugehen oder in dem zweiten Schaltzustand zu verbleiben oder von dem zweiten in den ersten Schaltzustand überzugehen. Auf diese Weise kann der elektrische Verbraucher 300 wahlweise von dem ersten Bordnetz 100 oder dem zweiten Bordnetz 200 mit elektrischer Energie / Spannung / Strom versorgt werden.

Die Informationen über das erste Bordnetz 100 können Informationen über eine Verfügbarkeit und/oder einen Zustand von mindestens einer Energiequelle / Spannungsversorgung des ersten Bordnetzes 100 aufweisen. Die Informationen über das zweite Bordnetz 200 können Informationen über eine Verfügbarkeit und/oder einen Zustand von mindestens einer Energiequelle / Spannungsversorgung des zweiten Bordnetzes 200 aufweisen. Rein beispielhaft sei hier angenommen, dass der Zustand der Energiequelle des ersten Bordnetzes 100 als gegenüber dem Zustand der Energiequelle des zweiten Bordnetzes 200 besser oder stärker oder langlebiger bekannt ist oder ermittelt wird. In diesem Fall kann die Steuerung 2 den ersten Schalter 10 in seinem ersten Schaltzustand belassen oder den ersten Schalter 10 oder eine für ein Schalten des ersten Schalters 10 zuständige Anordnung anweisen, dass der erste Schalter in seinem ersten Schaltzustand verbleibt. Alternativ sei ferner rein beispielhaft hier angenommen, dass der Zustand der Energiequelle des zweiten Bordnetzes 200 als gegenüber dem Zustand der Energiequelle des ersten Bordnetzes 100 besser oder stärker oder langlebiger bekannt ist oder ermittelt wird. In diesem Fall kann die Steuerung 2 den ersten Schalter 10 oder eine für ein Schalten des ersten Schalters 10 zuständige Anordnung anweisen, dass der erste Schalter 10 von seinem ersten Schaltzustand in seinen zweiten Schaltzustand übergeht.

Die Informationen über den mindestens einen elektrischen Verbraucher 300 können Informationen über einen Zustand des mindestens einen elektrischen Verbrauchers 300 aufweisen. Beispielsweise können die Informationen über den mindestens einen elektrischen Verbraucher 300 darauf hinweisen, welche(r) elektrische Verbraucher 300 (priorisiert) mit Energie zu versorgen ist/sind und welche(r) nicht. Beispielsweise kann ein sicherheitsrelevanter elektrischer Verbraucher 300 gegenüber einem nicht sicherheitsrelevanten elektrischen Verbraucher 300 priorisiert mit Energie versorgt werden. Ferner kann ein elektrischer Verbraucher 300 einer höheren Sicherheitsstufe gegenüber einem elektrischen Verbraucher 300 einer niedrigeren Sicherheitsstufe priorisiert mit Energie versorgt werden.

Der elektrische Verbraucher 300 kann auch als eine elektrische Last bezeichnet werden. Der elektrische Verbraucher 300 kann jeden grundsätzlich in einem Bordnetz eines Fahrzeugs einsetzbaren Verbraucher aufweisen oder als solcher ausgebildet sein. Der elektrische Verbraucher 300 kann einen nicht sicherheitsrelevanten Verbraucher aufweisen oder als nicht sicherheitsrelevanter Verbraucher ausgebildet sein. Als ein Beispiel für einen nicht sicherheitsrelevanten Verbraucher sei hier beispielhaft ein Komfortverbraucher genannt. Komfortverbraucher betreffen Heizungsverbraucher für beispielsweise für Innenraum, Sitze, Scheiben oder Lenkrad, Telematikkomponenten für Radio, Fernsehen oder GPS-Navigation, oder Verstellmotoren für Fenster, Sitze oder Lenkrad. Der elektrische Verbraucher 300 kann einen sicherheitsrelevanten Verbraucher aufweisen oder als sicherheitsrelevanter Verbraucher ausgebildet sein. Als Beispiel für einen sicherheitsrelevanten Verbraucher eines elektrischen Bordnetzes sei beispielsweise eine elektronische Lenkunterstützung oder Bremskraftverstärkung oder Komponenten eines elektrischen Stabilitätsprogramms (ESP) genannt.

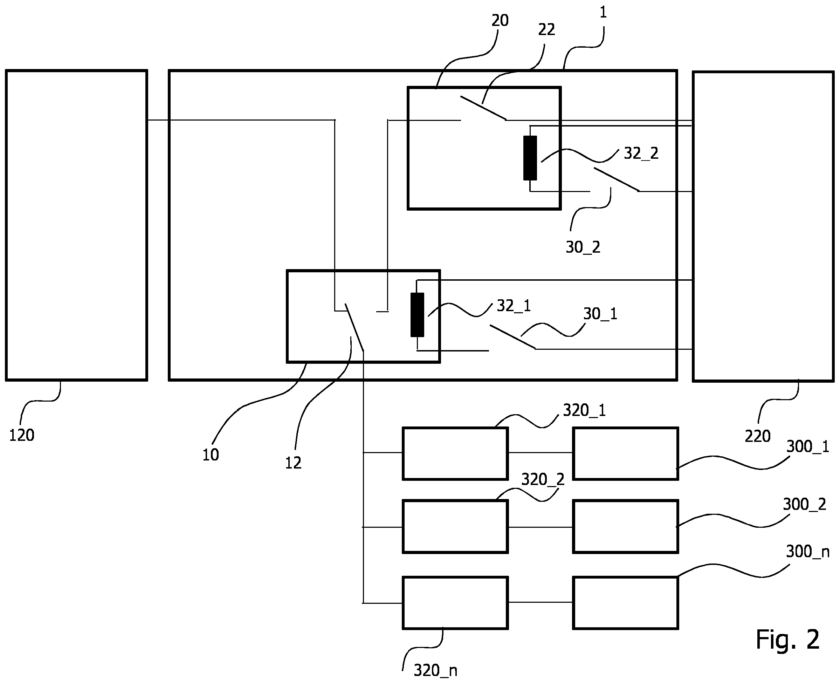

Figur 2 zeigt eine Variante der Vorrichtung 1 aus Figur 1. In Figur 2 sind drei elektrische Verbraucher 300_1, 300_2, 300_n dargestellt, um zu illustrieren, dass jede Anzahl an elektrischen Verbrauchern 300_1, 300_2, 300_n vorgesehen sein kann.

Die elektrischen Verbraucher 300_1, 300_2, 300_n oder elektrischen Komponenten können verschiedene Funktionen eines Fahrzeugs, beispielsweise eines Kraftfahrzeugs, betreffen. Bei den elektrischen Verbrauchern 300_1, 300_2, 300_n kann es sich zumindest teilweise um sicherheitsrelevante Komponenten/Verbraucher des Fahrzeugs handeln. Anders ausgedrückt kann es sich bei den elektrischen Verbrauchern 300_1, 300_2, 300_n zumindest teilweise um Komponenten handeln, die sicherheitsrelevante/sicherheitskritische Funktionen ausführen können. Die elektrischen Verbraucher 300_1, 300_2, 300_n können zumindest teilweise als sogenannte FailOperational Verbraucher ausgebildet sein.

Ein erster elektrischer Verbraucher 300_1 kann beispielsweise als eine linke Heckleuchte ausgebildet sein. Ein zweiter elektrischer Verbraucher 300_2 kann beispielsweise als eine rechte Heckleuchte ausgebildet sein. Für den dritten elektrischen Verbraucher 300_1, 300_2, 300_n gibt es verschiedene Möglichkeiten. In dem Beispiel aus Figur 2 können die elektrischen Verbraucher beispielhaft jeweils als sicherheitsrelevante elektrischen Verbraucher ausgebildet. Vor jeden der elektrischen Verbraucher 300_1, 300_2, 300_n ist in der beispielhaften Ausgestaltung aus Figur 2 jeweils eine Sicherung 320_1, 320_2, 320_n geschaltet, die jeweils beispielsweise als sogenannte eFuse ausgebildet sein kann.

Die elektrischen Verbraucher 300_1, 300_2, 300_n können zumindest teilweise sogenannte HAD Funktionen betreffen und somit als HAD Verbraucher oder Komponenten ausgebildet sein. Hierbei steht HAD als Abkürzung für "Highly Automated Driving" (auf Deutsch: Hochautomatisiertes Fahren (HAF)). Im Bereich des autonomen oder selbständigen Fahrens werden Funktionen eines Fahrzeugs in bestimmte Autonomiestufen, sogenannte SAE-Level, eingeteilt. In Europa und den USA (z. B. SAE J3016) wird die Klassifizierung des autonomen Fahrens in sechs Stufen vorgenommen:
- Autonomiestufe 0: Selbstfahrer ("Driver only"), der Fahrer fährt selbst (lenkt, beschleunigt, bremst etc.)
- Autonomiestufe 1: Fahrerassistenz. Bestimmte Assistenzsysteme helfen bei der Fahrzeugbedienung, beispielsweise der Abstandsregeltempomat (ACC).
- Autonomiestufe 2: Teilautomatisierung. Funktionen wie automatisches einparken, Spurhalten, allgemeine Längsführung, Beschleunigen, Abbremsen werden von den Assistenzsystemen übernommen, z. B. vom Stauassistent.
- Autonomiestufe 3: Bedingungsautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen.
- Autonomiestufe 4: Hochautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Autonomiestufe 5: Vollautomatisierung. Kein Fahrer erforderlich. Außer dem Festlegen des Ziels und dem Starten des Systems ist kein menschliches Eingreifen erforderlich. Das Fahrzeug kommt ohne Lenkrad und Pedale aus.

Demgemäß kann es sich bei den elektrischen Verbrauchern / Komponenten 300_1, 300_2, 300_n beispielsweise um Komponenten der Autonomiestufen 1 bis 5 handeln. Rein beispielhaft seien hier, neben den bereits genannten Heckleuchten, eine Komponente für eine Lenkung eines Fahrzeugs (Lenkkomponente), eine Komponente für eine Bremse eines Fahrzeugs (Bremskomponente), eine Komponente für eine Sensorgruppe eines Fahrzeugs (Sensorgruppenkomponente), eine Komponente für Hochleistungsladen/Schnellladesysteme (Englisch: High Power Charging; Hochleistungsladekomponente) und eine Komponente allgemein für eine Beleuchtung eines Fahrzeugs (Beleuchtungskomponente) genannt.

Der erste Schalter 10 ist beispielhaft als ein normalerweise geschlossener (normally closed (NC)) Schalter ausgebildet. In dem geschlossenen Ausgangszustand stellt der erste Schalter 10 beispielhaft eine Verbindung zwischen den elektrischen Verbrauchern 300_1, 300_2, 300_n und dem Bordnetzanschluss 120 des ersten Bordnetzes 100 her. Der Bordnetzanschluss 120 kann ein Dauerplus aufweisen oder als ein Dauerplus ausgebildet sein. Anders ausgedrückt, kann der Bordnetzanschluss 120 ein Dauerplus des ersten Bordnetzes 100 aufweisen, beispielsweise mit dem Dauerplus verbunden sein, oder als Dauerplus ausgebildet sein.

Ein solches Dauerplus wird oftmals auch als Klemme30 bezeichnet. Hierbei kann es sich um eine Plusleitung direkt von einer Energieversorgung / Spannungsversorgung / Stromversorgung, beispielswiese einer Batterie, des entsprechendes Bordnetzes handeln. Als Dauerplus werden im elektrischen Bordspannungsnetz eines Kraftfahrzeugs alle Kontakte bezeichnet, die permanent mit dem Pluspol der Starterbatterie verbunden sind, also sowohl bei ein- als auch bei ausgeschalteter Zündung. Das Dauerplus versorgt normalerweise diejenigen Steuergeräte und Baugruppen, die auch bei abgestelltem Fahrzeug funktionstüchtig sein müssen oder elektrische Energie benötigen, um zum Beispiel Daten zu halten. Mit Dauerplus versorgt ist im Normalfall der Schalter für die Warnblinkanlage und die gegebenenfalls vorhandene Zentralverriegelung, üblicherweise auch die Innenbeleuchtung, die über Türkontakte und die Zentralverriegelung geschaltet wird. Im Bereich der Komfortelektrik werden normalerweise beispielsweise auch Radio, Wegstreckenzähler (Tageskilometerzähler), Diebstahlwarnanlage, GPS-Empfänger und die Fernentriegelung/Keyless-Entry dauerhaft elektrischen Strom. Bei vielen elektrischen Verbrauchern hängt es vom Fahrzeughersteller ab, ob sie an Dauer- oder an Zündungsplus angeschlossen sind, beispielsweise Bordspannungssteckdose, Autoradio, Fahrlicht, elektrische Fensterheber, Bremslicht, Hupe usw. Bei einigen wenigen Fahrzeugen ist der Pluspol der Batterie mit der Karosserie verbunden, sodass eine permanente Stromversorgung über Dauerminus geschieht. Im letztgenannten Fall kann der Bordnetzanschluss 120 ein Dauerminus aufweisen oder als ein Dauerminus ausgebildet sein.

Die Steuerung 2 ist in Figur 2 der Einfachheit halber nicht gezeigt, aber kann entsprechend der Ausgestaltung aus Figur 1 angeordnet sein. Die Steuerung 2 weist beispielsweise den ersten Schalter 10 oder eine den ersten Schalter 10 schaltende Anordnung (z.B. eine unten beschriebene Spule 32_1) an, den zweiten Schaltzustand anzunehmen, z. B. von dem ersten Schaltzustand in den zweiten Schaltzustand überzugehen. In dem zweiten Schaltzustand stellt der erste Schalter 10 eine Verbindung zu einem zweiten Schalter 20 her. Der zweite Schalter 20 ist zwischen einem Bordnetzanschluss 220 eines zweiten Bordnetzes 200 des Fahrzeugs und dem ersten Schalter 10 angeordnet. Der Bordnetzanschluss 220 kann, entsprechend dem Bordnetzanschluss 120, ein Dauerplus (Klemme30) aufweisen oder als ein Dauerplus (Klemme 30) ausgebildet sein. Anders ausgedrückt kann der Bordnetzanschluss 220 ein Dauerplus des zweiten Bordnetzes 200 aufweisen, beispielsweise mit dem Dauerplus verbunden sein, oder als das Dauerplus ausgebildet sein.

Die Steuerung 2 kann zur Anweisung des ersten Schalters 10 verschiedene Informationen berücksichtigen. Zum Beispiel kann die Steuerung 2 Informationen über das erste Bordnetz 100 und/oder das zweite Bordnetz 200 und/oder mindestens einen der elektrischen Verbraucher 300_1, 300_2, 300_n berücksichtigen. Die Steuerung 2 kann den ersten Schalter 10 oder eine den ersten Schalter 10 schaltende Anordnung in Abhängigkeit von den entsprechenden Informationen anweisen, den ersten Schaltzustand oder den zweiten Schaltzustand anzunehmen.

Auf diese Weise kann der elektrische Verbraucher 300 wahlweise von dem ersten Bordnetz 100 oder dem zweiten Bordnetz 200 mit elektrischer Energie / Spannung / Strom versorgt werden.

Die Vorrichtung 100 aus Figur 2 weist, wie genannt, ferner einen zweiten Schalter 20 auf. Der zweite Schalter 20 ist mit dem Bordnetzanschluss 220 des zweiten Bordnetzes 200 verbindbar oder in dem Beispiel aus Figur 2 verbunden. Der zweite Schalter 20 ist ausgebildet, einen ersten Schaltzustand und einen zweiten Schaltzustand anzunehmen. Die Anweisung des zweiten Schalters 20, den ersten Schaltzustand oder den zweiten Schaltzustand anzunehmen, kann von der Steuerung 2 erfolgen.

In dem Beispiel aus Figur 2 ist der zweite Schalter 20 als ein normalerweise geöffneter (normally open (NO)) Schalter ausgebildet. Anders ausgedrückt, in seinem Ausgangszustand befindet sich der zweite Schalter 20 aus Figur 2 beispielhaft in einem offenen / geöffneten Schaltzustand. In diesem Ausgangszustand (= erster Schaltzustand), ist der zweite Schalter 20 angeordnet und ausgebildet, eine leitende Verbindung zwischen dem Bordnetzanschluss 220 des zweiten Bordnetzes 200 des Fahrzeugs und dem ersten Schalter 10 zu trennen oder zu verhindern. Durch Anweisung der Steuerung 2 kann der zweite Schalter 20 von dem ersten Schaltzustand in den zweiten Schaltzustand übergehen. In dem zweiten Schaltzustand kann der zweite Schalter 20 eine leitende Verbindung zwischen dem Bordnetzanschluss 220 des zweiten Bordnetzes 200 des Fahrzeugs und dem ersten Schalter 10 herstellen oder ermöglichen. Die leitende Verbindung zwischen dem Bordnetzanschluss 220 des zweiten Bordnetzes 200 und den Verbrauchern 300_1, 300_2, 300_n kann dadurch hergestellt werden, dass der erste Schalter 10 den zweiten Schaltzustand annimmt und der zweite Schalter 20 den zweiten Schaltzustand annimmt. Mit der geeigneten Hinzuschaltung des zweiten Schalters 20 kann eine Rückwirkungsfreiheit (freedom from/of interference) gemäß ISO 26262 sichergestellt werden. Beispielsweise kann bei einem Fehlverhalten des ersten Schalters 10 sichergestellt werden, dass die elektrischen Verbraucher 300_1, 300_2, 300_3 nur dann von dem zweiten Bordnetz 200 versorgt werden, wenn auch der zweite Schalter 20 geschlossen (in seinem zweiten Schaltzustand) ist.

In den gezeigten Beispielen sind das erste Bordnetz 100 und das zweite Bordnetz 200 galvanisch voneinander getrennt. Dementsprechend sind der erste Schalter 10 und der zweite Schalter 20 galvanisch voneinander getrennt. In dem ersten Bordnetz 100 ist beispielhaft eine elektrische Spannungsquelle vorgesehen. In dem zweiten Bordnetz 200 ist beispielhaft eine elektrische Spannungsquelle vorgesehen. Allgemein kann eine elektrische Energieversorgung des ersten Bordnetzes und/oder des zweiten Bordnetzes eine Energieversorgung für eine oder mehrere Lasten/Verbraucher bereitstellen. Die Energieversorgung kann als elektrische Spannungsversorgung oder Spannungsversorgungseinheit ausgebildet sein und demgemäß so bezeichnet werden. Die Spannungsversorgung/Spannungsversorgungseinheit ist ausgebildet, eine Spannung bereitzustellen. Die Spannungsversorgung kann, als Abgrenzung zu einer Hochvolt-Spannungsversorgung, als eine Niedervolt-Spannungsversorgung ausgebildet sein. Die Niedervolt-Spannungsversorgung kann eine Niedervolt-Batterie aufweisen oder als solche ausgebildet sein. Eine Niedervolt-Spannungsversorgung kann in einem Niedervolt-Bordnetz vorhanden sein. Unter einem Niedervolt-Bordnetz, oder kurz Bordnetz, kann die Gesamtheit aller elektrischen Komponenten in einem Fahrzeug, wie beispielsweise einem Kraftfahrzeug (Kfz), verstanden werden. Die Nennspannung üblicher Niedervolt-Bordnetze von Personenkraftwagen (Pkw) liegt für gewöhnlich bei 12 Volt (12 V). Für Lastkraftwagen (Lkw) liegt die Nennspannung üblicher Bordnetze in Europa zumeist bei 24 Volt (24 V), in den USA hingegen bei 12 Volt (12 V).

Die Energieversorgung des ersten Bordnetzes 100 und/oder des zweiten Bordnetzes 200 kann mindestens eine Batterie oder mindestens einen Akkumulator aufweisen oder als mindestens eine Batterie oder mindestens ein Akkumulator ausgebildet sein. Zusätzlich oder alternativ kann die Energieversorgung des ersten Bordnetzes 100 und/oder des zweiten Bordnetzes 200 mindestens einen Wandler, beispielsweise einen DC-DC-Wandler, aufweisen oder als mindestens ein Wandler, beispielsweise ein DC-DC-Wandler, ausgebildet sein.

Die Spannungsversorgungseinheit des ersten Bordnetzes 100 kann einen von einer Spannungsversorgung des zweiten Bordnetzes 200 galvanisch getrennt sein. Ein Gleichspannungswandler (auch als DC/DC-Wandler bezeichnet) des ersten Bordnetzes 100 kann von einem Gleichspannungswandler (auch als DC/DC-Wandler bezeichnet) des zweiten Bordnetzes 200 galvanisch getrennt sein. Der Gleichspannungswandler kann angeordnet und ausgebildet sein, die Spannung von dem jeweiligen Bordnetz (d. h. dem ersten 100 und/oder zweiten Bordnetz 200) zu erhalten. Der Gleichspannungswandler kann angeordnet und ausgebildet sein, aus der erhaltenen Spannung eine Ausgangsspannung zu erzeugen.

Die Vorrichtung 1 aus Figur 2 weist beispielhaft zwei dritte Schalter 30_1, 30_2 auf zur Veranschaulichung, dass mindestens ein dritter Schalter 30_1, 30_2 in der Vorrichtung 1 vorhanden sein kann. Die zwei dritten Schalter 30_1, 30_2 sind jeweils mit dem Bordnetzanschluss 220 des zweiten Bordnetzes 200 verbindbar oder verbunden. Die dritten Schalter 30_1, 30_2 sind jeweils ausgebildet, einen ersten Schaltzustand und einen zweiten Schaltzustand anzunehmen. Die Steuerung 2 ist ausgebildet, die dritten Schalter 30_1, 30_2 jeweils anzuweisen, den ersten Schaltzustand oder den zweiten Schaltzustand anzunehmen. Die dritten Schalter 30_1, 30_2 sind jeweils mit einer zugehörigen Induktivität 32_1, 32_2 verbunden. Die Induktivitäten 32_1, 32_2 sind beispielhaft jeweils als eine Spule / Relaisspule mit beispielsweise einem Eisenkern ausgebildet und werden demnach im Folgenden als Relaisspulen 32_1, 32_2 oder kurz nur als Spulen 32_1, 32_2 bezeichnet. Eine erste Spule 32_1 dient zum Schalten des ersten Schalters 10, genauer gesagt einer Schaltkomponente 12 des ersten Schalters 10. Eine zweite Spule 32_2 dient zum Schalten des zweiten Schalters 20, genauer gesagt einer Schaltkomponente 22 des zweiten Schalters 20.

In dem Beispiel aus Figur 2 sind beide dritten Schalter 30_1, 30_2 jeweils als ein normalerweise geöffneter (normally open (NO)) Schalter ausgebildet. In dem Ausgangszustand (=erster Schaltzustand) sind beide dritten Schalter 30_1, 30_2 offen/geöffnet. In dem ersten Schaltzustand besteht keine leitende Verbindung zwischen dem Bordnetzanschluss 220 des zweiten Bordnetzes 200 des Fahrzeugs und den jeweiligen Spulen 32_1, 32_2. Die Steuerung 2 kann die beiden dritten Schalter 30_1, 30_2 unabhängig voneinander anweisen, von dem ersten Schaltzustand in den zweiten Schaltzustand überzugehen. In dem zweiten Schaltzustand wird eine leitende Verbindung zwischen dem Bordnetzanschluss 220 des zweiten Bordnetzes 200 des Fahrzeugs und der jeweiligen Spule 32_1, 32_2 hergestellt, deren zugehöriger dritter Schalter 30_1, 30_2 geschlossen ist. Mit Hilfe der jeweiligen Spulen 32_1, 32_2 kann eine zugehörige Schaltkomponente 12, 22 des ersten Schalters 10 und/oder zweiten Schalters 20 geschlossen werden. Dies kann beispielsweise dadurch geschehen, dass bei einem Stromfluss durch die Spule 32_1 und/oder die Spule 32_2 ein magnetisches Feld erzeugt wird, welches wiederum die Schaltkomponente 12 (beispielsweise einen Anker 12) und/oder die Schaltkomponente 22 (beispielsweise einen Anker 22) anziehen und damit von dem ersten Schaltzustand in den zweiten Schaltzustand bringen kann. Es kann somit auch davon gesprochen werden, dass die Spule 32_1 ein Teil des ersten Schalters 10 ist. Anders ausgedrückt, der erste Schalter 10 kann eine erste Schaltkomponente 12 und eine erste Spule 32_1 aufweisen. Zudem kann davon gesprochen werden, dass die Spule 32_2 ein Teil des zweiten Schalters 20 ist. Anders ausgedrückt, der zweite Schalter 20 kann eine zweite Schaltkomponente 22 und eine zweite Spule 32_2 aufweisen.

Ist beispielsweise der dritte Schalter 30_1 geschlossen, fließt aus dem zweiten Bordnetz 200 ein Strom durch die zugehörige Spule 32_1, welche durch den Stromfluss ein Magnetfeld erzeugt. Durch das Magnetfeld wird die Schaltkomponente 12 des ersten Schalters 10 angezogen und geschlossen. Auf diese Weise kann der erste Schalter 10 von dem ersten Schaltzustand in den zweiten Schaltzustand übergehen Ist beispielsweise der dritte Schalter 30_2 geschlossen, fließt aus dem zweiten Bordnetz 200 ein Strom durch die zugehörige Spule 32_2, welche durch den Stromfluss ein Magnetfeld erzeugt. Durch das Magnetfeld wird die Schaltkomponente 22 des zweiten Schalters 20 angezogen und geschlossen. Auf diese Weise kann der zweite Schalter 20 von dem ersten Schaltzustand in den zweiten Schaltzustand übergehen.

Wie zuvor beschrieben können mit den Relaisspulen / Spulen 32_1 und 32_2 die Schaltkomponenten 12, 22 geschaltet werden. Damit die Spulen 32_1, 32_2 stromdurchflossen werden, ein Magnetfeld erzeugen und somit die Schaltkomponenten 12, 22 schalten, werden die Schalter 30_1, 30_2 verwendet. Die Schalter 30_1, 30_2 können als Halbleiterschalter ausgebildet sein, um ein zuverlässiges Schalten zu ermöglichen oder sicherzustellen. Durch die beschrieben Lösung können somit die grundsätzlichen Probleme überwunden werden, dass ein Relaisschalter kein absolut sicheres Abschalten ermöglicht (kann "kleben" bleiben), eine reine Halbleiterlösung (=eine reine Realisierung mit Halbleiterschaltern) aber keine galvanische Trennung der Schalter und Bordnetze 100, 200 bietet. Durch eine Schaltung, bei der beide Technologien kombiniert werden (Schalter 10, 20 als Relaisschalter und Schalter 30_1, 30_2 als Halbleiterschalter), stellt man beide Anforderungen sicher.

Die Vorrichtung 1 kann in einem Steuergerät, beispielsweise einer Electronic Control Unit (ECUs) wie einem Zonensteuergerät, ausgebildet oder vorgesehen sein. Die Verbraucher 300_1, 300_2, 300_n können jeweils als Steuerkomponenten oder Sensoren oder Aktuatoren ausgebildet sein. Die Vorrichtung 1 kann als elektronisches Steuergerät ausgebildet sein oder ein elektronisches Steuergerät aufweisen oder in einem elektronischen Steuergerät ausgebildet sein. Die Vorrichtung 1, beispielsweise ein die Vorrichtung 1 aufweisendes Steuergerät, z. B. ein Zonensteuergerät, kann mit einer Teilmenge oder allen der Verbraucher 300_1, 300_2, 300_n direkt oder indirekt verbunden sein. Die Verbraucher 300_1, 300_2, 300_n können teilweise untereinander vernetzt sein. Die Verbraucher 300_1, 300_2, 300_n können zu einer gleichen oder zu unterschiedlichen Domänen gehören. Rein beispielhaft seien Sensoren und/oder Aktuatoren für verschiedene Fahrzeugfunktionen, wie beispielsweise Fahrzeugleuchten, Scheibenwischer, Tür-/Fenstersteuerungen und Motorsteuerungen genannt.

Mit der beschriebenen Vorrichtung kann sichergestellt werden, dass mindestens ein Verbraucher, wie z. B. Rückleuchten/Bremsleuchten, aus zwei Bordnetzen versorgt werden kann. Es wird durch ein intelligent schaltendes Relais eine intelligente Lösung bereitgestellt, die je nach Zustand von Energiequellen und/oder Verfügbarkeiten von Bordnetzquellen oder Bordnetzen leitende Verbindungen zu Verbrauchern zu- und/oder abschalten kann.

## Patentansprüche

1. Vorrichtung (1) zur redundanten Versorgung mindestens eines elektrischen Verbrauchers (300; 300_1, 300_2, 300_3), aufweisend:
einen ersten Schalter (10), der mit mindestens einem Verbraucheranschluss mindestens eines elektrischen Verbrauchers (300; 300_1, 300_2, 300_3) verbindbar oder verbunden und ausgebildet ist, einen ersten Schaltzustand und einen zweiten Schaltzustand anzunehmen,
eine Steuerung (2), die ausgebildet ist, den ersten Schalter (10) anzuweisen, den ersten Schaltzustand oder den zweiten Schaltzustand anzunehmen,
wobei der erste Schalter (10) angeordnet und ausgebildet ist, in dem ersten Schaltzustand eine leitende Verbindung zwischen einem Bordnetzanschluss (120) eines ersten Bordnetzes (100) eines Fahrzeugs und dem mindestens einen Verbraucheranschluss des mindestens einen elektrischen Verbrauchers (300; 300_1, 300_2, 300_3) herzustellen und in dem zweiten Schaltzustand eine leitende Verbindung zwischen einem Bordnetzanschluss (220) eines zweiten Bordnetzes (200) des Fahrzeugs und dem mindestens einen Verbraucheranschluss des mindestens einen elektrischen Verbrauchers (300; 300_1, 300_2, 300_3) herzustellen.

2. Vorrichtung (1) nach Anspruch 1, wobei die Steuerung (2) ausgebildet ist, den ersten Schalter (10) in Abhängigkeit von Informationen über das erste Bordnetz (100) und/oder das zweite Bordnetz (200) und/oder den mindestens einen elektrischen Verbraucher (300; 300_1, 300_2, 300_3) anzuweisen, den ersten Schaltzustand oder den zweiten Schaltzustand anzunehmen.

3. Vorrichtung (1) nach Anspruch 2, wobei
die Informationen über das erste Bordnetz (100) Informationen über eine Verfügbarkeit und/oder einen Zustand von mindestens einer Energiequelle / Spannungsversorgung des ersten Bordnetzes (100) aufweisen, und/oder
die Informationen über das zweite Bordnetz (200) Informationen über eine Verfügbarkeit und/oder einen Zustand von mindestens einer Energiequelle / Spannungsversorgung des zweiten Bordnetzes (200) aufweisen, und/oder
die Informationen über den mindestens einen elektrischen Verbraucher (300; 300_1, 300_2, 300_3) Informationen über einen Zustand des mindestens einen elektrischen Verbrauchers (300; 300_1, 300_2, 300_3) aufweisen.

4. Vorrichtung (1) nach einem der Ansprüche 1 bis 3, wobei der erste Schalter (10) als ein normalerweise geschlossener Schalter (10) ausgebildet ist.

5. Vorrichtung (1) nach einem der Ansprüche 1 bis 4, wobei die Vorrichtung (1) ferner einen zweiten Schalter (20) aufweist, der mit einem Bordnetzanschluss (220) des zweiten Bordnetzes (200) verbindbar oder verbunden ist und ausgebildet ist, einen ersten Schaltzustand und einen zweiten Schaltzustand anzunehmen,
wobei die Steuerung (2) ausgebildet ist, den zweiten Schalter (20) anzuweisen, den ersten Schaltzustand oder den zweiten Schaltzustand anzunehmen,
wobei der zweite Schalter (20) angeordnet und ausgebildet ist, in dem ersten Schaltzustand eine leitende Verbindung zwischen dem Bordnetzanschluss (220) des zweiten Bordnetzes (200) des Fahrzeugs und dem ersten Schalter (10) zu trennen und in dem zweiten Schaltzustand eine leitende Verbindung zwischen dem Bordnetzanschluss (220) des zweiten Bordnetzes (200) des Fahrzeugs und dem ersten Schalter (10) herzustellen.

6. Vorrichtung (1) nach Anspruch 5, wobei der zweite Schalter (20) als ein normalerweise geöffneter Schalter ausgebildet ist.

7. Vorrichtung (1) nach einem der Ansprüche 1 bis 6, wobei die Vorrichtung (1) mindestens einen dritten Schalter (30) aufweist, der mit einem Bordnetzanschluss (220) des zweiten Bordnetzes (200) verbindbar oder verbunden ist und ausgebildet ist, einen ersten Schaltzustand und einen zweiten Schaltzustand anzunehmen,
wobei die Steuerung (2) ausgebildet ist, den mindestens einen dritten Schalter (30) anzuweisen, den ersten Schaltzustand oder den zweiten Schaltzustand anzunehmen,
wobei der mindestens eine dritte Schalter (30) angeordnet und ausgebildet ist, in dem ersten Schaltzustand eine leitende Verbindung zwischen dem Bordnetzanschluss (220) des zweiten Bordnetzes (200) des Fahrzeugs und mindestens einer Induktivität, insbesondere mindestens einer Spule (32_1, 32_2), zu trennen und in dem zweiten Schaltzustand eine leitende Verbindung zwischen dem Bordnetzanschluss (220) des zweiten Bordnetzes (200) des Fahrzeugs und der mindestens einen Induktivität, insbesondere der mindestens einen Spule (32_1, 32_2), herzustellen.

8. Vorrichtung (1) nach Anspruch 7, wobei die mindestens eine Induktivität, insbesondere die mindestens eine Spule (32_1, 32_2), ausgebildet und angeordnet ist, den ersten Schalter (10) von dem ersten Schaltzustand in den zweiten Schaltzustand zu überführen und/oder den zweiten Schalter (20) von dem ersten Schaltzustand in den zweiten Schaltzustand zu überführen, wenn die leitende Verbindung zwischen dem Bordnetzanschluss (220) des zweiten Bordnetzes (200) des Fahrzeugs und der mindestens einen Induktivität, insbesondere der mindestens einen Spule (32_1, 32_2), hergestellt ist.

9. Vorrichtung (1) nach einem der Ansprüche 1 bis 8, wobei
das erste Bordnetz (100) und das zweite Bordnetz (200) galvanisch voneinander getrennt sind; und/oder
in dem ersten Bordnetz (100) ein elektrische Spannungsquelle vorgesehen ist; und/oder
in dem zweiten Bordnetz (200) eine elektrische Spannungsquelle vorgesehen ist.

10. Vorrichtung (1) nach einem der Ansprüche 1 bis 9, wobei der mindestens eine elektrische Verbraucher (300; 300_1, 300_2, 300_3) mindestens einen sicherheitsrelevanten elektrischen Verbraucher, beispielsweise eine Rückleuchte eines Fahrzeugs, aufweist oder als ein sicherheitsrelevanter elektrischer Verbraucher, beispielsweise als eine Rückleuchte eines Fahrzeugs, ausgebildet ist.

11. Steuergerät zur redundanten Versorgung eines elektrischen Verbrauchers (300; 300_1, 300_2, 300_3), wobei das Steuergerät die Vorrichtung (1) nach einem der Ansprüche 1 bis 10 aufweist.

12. Fahrzeug zur redundanten Versorgung eines elektrischen Verbrauchers (300; 300_1, 300_2, 300_3), wobei das Fahrzeug aufweist:
die Vorrichtung (1) nach einem der Ansprüche 1 bis 10 und/oder das Steuergerät nach Anspruch 11; und
mindestens einen elektrischen Verbraucher (300; 300_1, 300_2, 300_3).
